# EUROPÄISCHE PATENTSCHRIFT

(11) **EP 3 757 334 B1**
(45) Veröffentlichungstag und Bekanntmachung des Hinweises auf die Patenterteilung: **26.07.2023**
(21) Anmeldenummer: 20165483.7
(22) Anmeldetag: 25.03.2020
(51) Int. Cl.: E05F 15/603, E05F 15/611, E05F 15/40

(54) **ANTRIEB**
DRIVE
ENTRAÎNEMENT

(30) Priorität: 27.06.2019 DE 102019209375
(43) Veröffentlichungstag der Anmeldung: 30.12.2020
(73) Patentinhaber: GEZE GmbH, 71229 Leonberg (DE)
(72) Erfinder: Budarick, Marko, 70199 Stuttgart (DE); Braun, Verena, 70197 Stuttgart (DE)

(56) Entgegenhaltungen:
- EP-A1- 3 208 148
- WO-A1-2018/185019
- WO-A2-2016/022534
- DE-A1-102015 106 036
- DE-U1-202005 021 833
- US-A- 5 913 763

## Beschreibung

Die Erfindung betrifft einen Antrieb für einen Flügel eines Fensters, einer Tür oder dergleichen mit einem Gehäuse, einer motorischen Antriebseinheit und einer elektronischen Steuerungseinheit.

Antriebe der eingangs genannten Art sind allgemein bekannt. Nachdem über deren motorische Antriebseinheit der Flügel des Fensters, der Tür oder dergleichen automatisch betätigbar ist, bringen sie einen entsprechend höheren Komfort des Fensters, der Tür oder dergleichen mit sich.

Bei den bisher üblichen Antrieben besteht nun aber häufig das Problem, dass der Anwender im Unklaren über den tatsächlichen Öffnungszustand des Flügels, den jeweiligen Zustand des Antriebs und/oder dergleichen bleibt.

Ein Antrieb mit den Merkmalen des Oberbegriffs des Anspruchs 1 ist aus dem Dokument WO 2018/185019 A1 bekannt.

Der Erfindung liegt die Aufgabe zugrunde, einen Antrieb der eingangs genannten Art anzugeben, mit dem das zuvor erwähnte Problem beseitigt ist. Dabei soll auf möglichst einfache Weise insbesondere gewährleistet sein, dass sich der Anwender einen schnellen, zuverlässigen Überblick über den jeweiligen Öffnungszustand des Flügels, des Antriebs und/oder dergleichen verschaffen kann.

Erfindungsgemäß wird die Aufgabe durch einen Antrieb mit den Merkmalen des Anspruchs 1 gelöst. Bevorzugte Ausführungsformen des erfindungsgemäßen Antriebs ergeben sich aus den Unteransprüchen, der Beschreibung sowie der Zeichnung.

Der erfindungsgemäße Antrieb für einen Flügel eines Fensters, einer Tür oder dergleichen umfasst ein Gehäuse, eine motorische Antriebseinheit, eine elektronische Steuerungseinheit, eine mit der elektronischen Steuerungseinheit in Verbindung stehende Messeinrichtung zur Erfassung des Öffnungszustands des Flügels und eine über die elektronische Steuerungseinheit ansteuerbare Anzeigeeinrichtung zur Anzeige des Öffnungszustands des Flügels und zusätzlich wenigstens einer weiteren Information. Dabei umfasst die Anzeigeeinrichtung eine Mehrzahl von Leuchtmitteln, insbesondere Leuchtdioden (LEDs), die über die elektronische Steuerungseinheit so ansteuerbar sind, dass ein Sichtfeld der Anzeigeeinrichtung in Abhängigkeit von dem Öffnungszustand des Flügels und zusätzlich der wenigstens einen weiteren Information über unterschiedliche Bereiche und/oder mit unterschiedlichen Farben ausleuchtbar ist.

Aufgrund dieser Ausbildung kann sich der Anwender auf relativ einfache Weise einen schnellen, zuverlässigen Überblick über den jeweiligen Öffnungszustand des Flügels, den Zustand des Antriebs und/oder dergleichen verschaffen. Der von der Messeinrichtung erfasste tatsächliche Öffnungszustand des Flügels wird an die elektronische Steuerungseinheit übermittelt, über die die Leuchtmittel der Anzeigeeinrichtung so angesteuert werden, dass das Sichtfeld in entsprechenden Bereichen und/oder mit entsprechenden Farben ausgeleuchtet wird. Außer dem Flügelzustand werden über die elektronische Steuerungseinheit auch weitere Informationen entsprechend angezeigt.

Der erfindungsgemäße Antrieb zeichnet sich dadurch aus, dass das Gehäuse und das Sichtfeld jeweils eine längliche Form besitzen. Die Längsrichtung des Gehäuses und die Längsrichtung des Sichtfeldes verlaufen dabei parallel zueinander.

Das Sichtfeld der Anzeigeeinrichtung ist in Form eines zumindest im Wesentlichen geradlinigen, sich in Längsrichtung des Gehäuses erstreckenden, gegebenenfalls unterbrochenen, Spaltes vorgesehen. In diesem Fall sind die Leuchtmittel der Anzeigeeinrichtung über die elektronische Steuereinheit so ansteuerbar, dass der das Sichtfeld bildende, sich in Längsrichtung des Gehäuses erstreckende Spalt in Abhängigkeit von dem Öffnungszustand des Flügels und der wenigstens einen weiteren Information über unterschiedliche Längen hinweg und/oder mit unterschiedlichen Farben ausleuchtbar ist.

Die Leuchtmittel der Anzeigeeinrichtung sind zweckmäßigerweise insbesondere wechselseitig auf einer Platine angeordnet. Dabei kann sich die Platine insbesondere in Längsrichtung des Gehäuses erstrecken, wobei die Leuchtmittel wechselseitig auf der rechten und linken Längsseite dieser Platine angeordnet sind.

Das Licht der Leuchtmittel ist in eine Lichtleitereirichtung mit zumindest einem Lichtleiter gerichtet, um das Licht der Leuchtmittel zu dem Sichtfeld zu transportieren. Sofern immer das gesamte Sichtfeld, jedoch mit unterschiedlichen Farben ausgeleuchtet werden soll, ist grundsätzlich ein Lichtleiter ausreichend. Es sind mehrere Lichtleiter vorgesehen, die derart angeordnet sind, dass sie ausgehend von den Leuchtmitteln in voneinander verschiedenen Abschnitten des Sichtfeldes enden, so dass unterschiedliche Bereiche des Sichtfelds, mit derselben Farbe oder unterschiedlichen Farben, ausleuchtbar sind.

Dabei ist insbesondere von Vorteil, wenn die Anzeigeeinrichtung einen der Lichtleitereinrichtung nachgeordneten, insbesondere im Bereich des Sichtfeldes angeordneten, Diffusor umfasst, um das Licht der Leuchtmittel zu streuen, um dem Sichtfeld ein homogenes Erscheinungsbild zu verleihen. Für den Anwender ist damit das Ablesen des jeweiligen Flügelzustands bzw. der jeweiligen weiteren Information erleichtert.

Die Leuchtdioden können zumindest eine RGB-Leuchtdiode umfassen. Bei einer RGB-Leuchtdiode werden drei Leuchtdioden mit den Farben Rot, Grün, Blau in einem gemeinsamen LED-Gehäuse miteinander kombiniert. Dabei kann eine jeweilige Farbe der Anzeige durch eine entsprechende Mischung der drei Grundfarben Rot, Grün und Blau erzeugt werden.

Vorteilhafterweise sind die Leuchtmittel über die elektronische Steuerungseinheit so ansteuerbar, dass das Sichtfeld insgesamt und/oder, insbesondere in der vorgenannten Längsrichtung betrachtet, bereichsweise mit unterschiedlicher Farbe ausleuchtbar ist. Die Leuchtmittel können über die elektronische Steuerungseinheit auch so ansteuerbar sein, dass das Sichtfeld, insbesondere in der vorgenannten Längsrichtung betrachtet, mit unterschiedlichen Längen ausleuchtbar ist.

Gemäß einer zweckmäßigen praktischen Ausführungsform des erfindungsgemäßen Antriebs sind die Leuchtmittel über die elektronische Steuerungseinheit so ansteuerbar sind, dass über unterschiedliche Farben und/oder unterschiedliche Längen einer jeweiligen Anzeige im Sichtbereich unterschiedliche Wichtigkeiten des jeweiligen Öffnungszustands des Flügels bzw. der jeweiligen weiteren Information signalisierbar sind. Ist der Öffnungszustand des Flügels bzw. die jeweilige weitere Information besonders wichtig, so kann dies also beispielsweise dadurch kenntlich gemacht werden, dass die mit der betreffenden Farbe erzeugte Anzeige im Sichtfeld eine entsprechende Farbe oder entsprechend größere Länge besitzt.

Bei der jeweiligen weiteren Information handelt es sich um eine Information zu einer Raumluftqualität wie Luftfeuchtigkeit, Innentemperatur und CO2-Wert.

Die motorische Antriebseinheit umfasst zweckmäßigerweise ein mittels eines Elektromotors angetriebenes Spindelgetriebe, über das der Flügel betätigbar ist. In diesem Fall ist der Flügel über einen Spindelantrieb zwischen einer Offen- und einer Geschlossenstellung bewegbar. Grundsätzlich sind zur Betätigung des Flügels jedoch auch andere Antriebe wie beispielsweise ein Kettenantrieb oder dergleichen denkbar.

Die Messeinrichtung umfasst vorteilhafterweise einen Wegmesser, insbesondere ein Potentiometer oder dergleichen. Über einen solchen Wegmesser ist ein jeweiliger Öffnungszustand des Flügels auf einfache und zuverlässige Weise erfassbar.

Von Vorteil ist insbesondere auch, wenn der Antrieb ein Bedienfeld umfasst. Über ein solches Bedienfeld kann der Anwender bestimmte Funktionen des Antriebs, insbesondere das Öffnen und Schließen des Flügels, vorgeben.

Die Erfindung wird im Folgenden anhand von Ausführungsbeispielen unter Bezugnahme auf die Zeichnung näher erläutert; in dieser zeigen:
- Fig. 1: eine schematische Seitenansicht einer beispielhaften Ausführungsform eines erfindungsgemäßen Antriebs,
- Fig. 2: eine schematische Längsschnittdarstellung des Antriebs gemäß Fig. 1, und
- Fig. 3: beispielhafte unterschiedliche Ausleuchtungen des Sichtfeldes der Anzeigeeinrichtung des Antriebs gemäß Fig. 1.

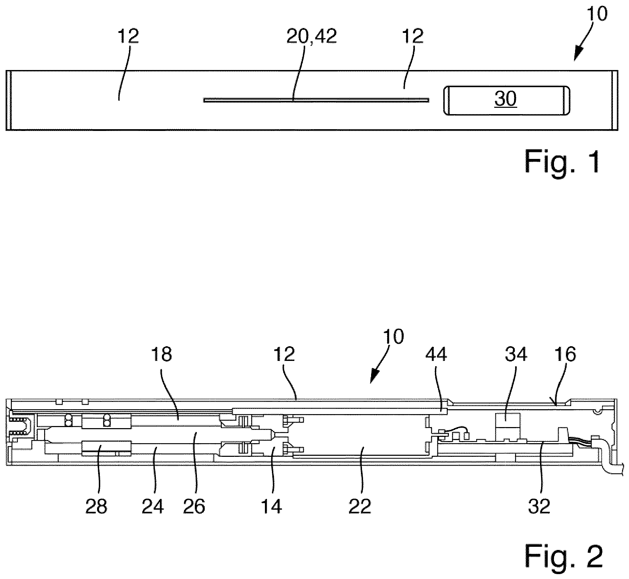

Die Fig. 1 und 2 zeigen in schematischer Darstellung eine beispielhafte Ausführungsform eines erfindungsgemäßen Antriebs 10 für einen Flügel eines Fensters, einer Tür oder dergleichen.

Der Antrieb 10 umfasst ein Gehäuse 12, eine motorische Antriebseinheit 14, eine elektronische Steuerungseinheit 16, eine mit der elektronischen Steuerungseinheit 16 in Verbindung stehende Messeinrichtung 18 zur Erfassung des Öffnungszustands des Flügels und eine über die elektronische Steuerungseinheit 16 ansteuerbare Anzeigeeinrichtung 20 zur Anzeige der Öffnungszustands des Flügels und zur zusätzlichen Anzeige wenigstens einer weiteren Information.

Die motorische Antriebseinheit 14 umfasst im vorliegenden Fall beispielsweise ein mittels eines Elektromotors 22 angetriebenes Spindelgetriebe 24 mit einer Spindel 26 und einer Spindelmutter 28, über das der Flügel betätigbar ist. Die Messeinrichtung 18 kann beispielsweise einen Wegmesser, insbesondere ein Potentiometer oder dergleichen, umfassen, mit dem der jeweilige Öffnungszustand des Flügels auf einfache Weise zuverlässig erfassbar ist.

Zudem kann der Antrieb 10 mit einem Bedienfeld 30 versehen sein, über das der Anwender unterschiedliche Funktionen des Antriebs 10 vorgeben kann, insbesondere das elektrische Öffnen und Schließen des Flügels initiieren kann. Wie aus Fig. 2 ersichtlich ist, ist das Bedienfeld 30 im vorliegenden Fall über einen Halter 44 in das Gehäuse 12 eingebracht. Wie aus der Fig. 2 weiter ersichtlich ist, kann die elektronische Steuerungseinheit 16 auf einer Steuerungsplatine 32 angeordnet sein, die über einen Halter 34 im Gehäuse 12 montiert ist.

Die Anzeigeeinrichtung 20 umfasst eine Mehrzahl von Leuchtmitteln (nicht dargestellt), insbesondere Leuchtdioden, die über die elektronische Steuerungseinheit 16 so ansteuerbar sind, dass ein Sichtfeld 42 der Anzeigeeinrichtung 20 in Abhängigkeit von dem Öffnungszustand des Flügels und von zusätzlich der wenigstens einen weiteren Information über unterschiedliche Bereiche und/oder mit unterschiedlichen Farben ausleuchtbar ist.

Dabei besitzt das Gehäuse 12 eine längliche Form, wobei das Sichtfeld 42 der Anzeigeeinrichtung 20 in Form eines zumindest im Wesentlichen geradlinigen, sich in Längsrichtung des Gehäuses 12 erstreckenden Spaltes vorgesehen ist. Die Längsrichtung des Gehäuses 12 und die Längsrichtung des Spaltes sind dabei parallel zueinander angeordnet. Grundsätzlich ist es möglich, dass der Spalt nicht durchgehend ist, sondern ein- oder mehrfach unterbrochen ist, d.h. in mehrere separate Segmente unterteilt ist.

Die Leuchtdioden der Anzeigeeinrichtung 20 können insbesondere wechselseitig auf einer Platine, insbesondere der Steuerungsplatine 32, angeordnet sein. Dabei kann sich die Platine in Längsrichtung des Gehäuses 12 erstrecken, wobei die Leuchtdioden wechselseitig auf der rechten und linken Längsseite dieser Platine angeordnet sein können.

Das Licht der Leuchtdioden kann in einen oder mehrere Lichtleiter (nicht dargestellt) gerichtet sein, um das Licht der Leuchtdioden zu dem Sichtfeld 42 zu transportieren, insbesondere über das Sichtfeld 42 zu verteilen. Dabei kann vorgesehen sein, dass ein Lichtleiter von verschiedenfarbigen Leuchtdioden beaufschlagbar ist, um das gesamte Sichtfeld 42 mit der Farbe einer jeweiligen Leuchtdiode oder einer Mischfarbe, die sich aus dem Licht mehrerer Leuchtdioden zusammensetzt, auszuleuchten. Um verschiedene Abschnitte des Sichtfelds unterschiedlich auszuleuchten, sind jedoch mehrere Lichtleiter vorgesehen, die in den verschiedenen Abschnitten enden und bevorzugt von getrennt voneinander angeordneten Leuchtdioden oder Gruppen von Leuchtdioden beaufschlagt werden.

Dabei kann das Licht der Leuchtdioden durch einen Diffusor, der den Lichtleitern nachgeordnet ist und der in das Sichtfeld, d.h. den in dem Gehäuse ausgebildeten Spalt, eingesetzt ist, gestreut werden, um dem Sichtfeld ein homogenes Erscheinungsbild zu verleihen. Bei einem unterbrochenen Sichtfeld-Spalt kann es sich bei dem Diffusor um mehrere Diffusorstücke handeln, die in die vorgenannten Segmente eines unterbrochenen Sichtfeld-Spaltes eingesetzt sind.

Als Leuchtdioden können zumindest teilweise RGB-Leuchtdioden vorgesehen sein. Die jeweiligen Farben können somit durch eine entsprechende Mischung der drei Grundfarben Rot, Grün und Blau erzeugt werden.

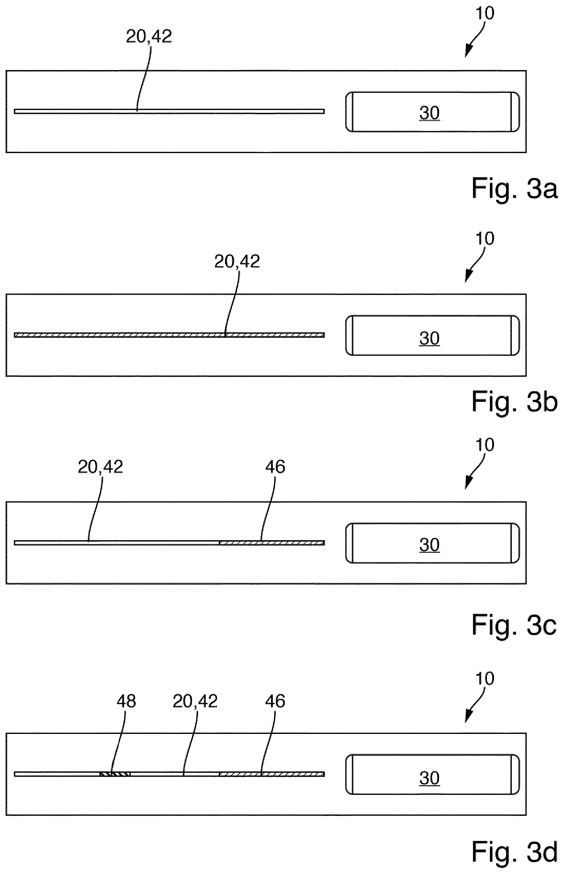

Die Leuchtdioden sind über die elektronische Steuerungseinheit 16 beispielsweise so ansteuerbar, dass das Sichtfeld 42 insgesamt (vgl. Fig. 3b) und/oder über die Länge des Sichtfelds 42 betrachtet bereichsweise (vgl. die Fig. 3c und 3d) mit unterschiedlicher Farbe ausleuchtbar ist. So ist beispielsweise in der Darstellung gemäß Fig. 3b) das Sichtfeld 42 insgesamt mit der Farbe Blau ausgeleuchtet, während das Sichtfeld 42 in der Darstellung gemäß Fig. 3c) lediglich in einem ersten, rechts gelegenen Bereich 46 blau und ansonsten weiß ausgeleuchtet wird. Demgegenüber wird das Sichtfeld 42 in der Darstellung gemäß Fig. 3d) beispielsweise in dem ersten Bereich 46 mit der Farbe Blau, in einem zweiten, weiter links gelegenen Bereich 48 mit der Farbe Rot und ansonsten mit der Farbe Weiß ausgeleuchtet. In der Darstellung gemäß Fig. 3a) erscheint das Sichtfeld 42 durchgehend in der Farbe Weiß. Alternativ ist es auch möglich, dass die in den Fig. 3c) und 3d) weiß ausgeleuchteten Bereiche nicht ausleuchtet werden. Die Ausleuchtung mit der Farbe Weiß gemäß Fig. 3a) kann beispielsweise einen geschlossen Flügel anzeigen, wohingegen die Ausleuchtung mit der Farbe Blau gemäß Fig. 3b) einen insbesondere vollständig geöffneten Flügel anzeigen kann. Die Ausleuchtung gemäß Fig. 3c) kann beispielsweise einen teilweise geöffneten Flügel anzeigen, wohingegen bei der Ausleuchtung gemäß Fig. 3d) durch den Bereich 48 zusätzlich eine weitere Information angezeigt wird.

Die Leuchtdioden können über die elektronische Steuerungseinheit 16 auch so ansteuerbar sein, dass über unterschiedliche Farben und/oder unterschiedliche Längen einer jeweiligen Anzeige im Sichtfeld 42 der Anzeigeeinrichtung 20 unterschiedliche Wichtigkeiten des durch die jeweilige Farbe und/oder die jeweilige Länge repräsentierten Öffnungszustands des Flügels bzw. der die jeweilige Farbe und/oder die jeweilige Länge repräsentierten jeweiligen weiteren Information signalisierbar sind.

Beispielsweise ist das Sichtfeld 42 der Anzeigeeinrichtung 20 über die Leuchtdioden in Abhängigkeit von noch weiteren Informationen über unterschiedliche Bereiche und/oder mit unterschiedlichen Farben ausleuchtbar, die Statusmeldungen wie Störungen, insbesondere Blockaden, eine Öffnung des Flügels mit besonderer Aufmerksamkeit wie zum Beispiel eine mit einem Gefahrenzustand einhergehende Drehposition des Flügels und/oder dergleichen umfassen.

Über die Anzeigeeinrichtung 20 des erfindungsgemäßen Antriebs 20 kann sich der Anwender somit auf einfache Weise schnell und zuverlässig einen umfassenden Überblick über den Öffnungszustand des Flügels und der Umgebung verschaffen.

### Bezugszeichenliste

- 10: Antrieb
- 12: Gehäuse
- 14: motorische Antriebseinheit
- 16: elektronische Steuerungseinheit
- 18: Messeinrichtung
- 20: Anzeigeeinrichtung
- 22: Elektromotor
- 24: Spindelgetriebe
- 26: Spindel
- 28: Spindelmutter
- 30: Bedienfeld
- 32: Steuerungsplatine
- 34: Halter
- 42: Sichtfeld
- 44: Halter
- 46: erster Bereich
- 48: zweiter Bereich

## Patentansprüche

1. Antrieb (10) für einen Flügel eines Fensters, einer Tür oder dergleichen, mit einem Gehäuse (12), einer motorischen Antriebseinheit (14), einer elektronischen Steuerungseinheit (16), einer mit der elektronischen Steuerungseinheit (16) in Verbindung stehenden Messeinrichtung (18) zur Erfassung des Öffnungszustands des Flügels und einer über die elektronische Steuerungseinheit (16) ansteuerbaren Anzeigeeinrichtung (20) zur Anzeige des Öffnungszustands des Flügels und zusätzlich wenigstens einer weiteren Information, wobei die Anzeigeeinrichtung (20) eine Mehrzahl von Leuchtmitteln, insbesondere Leuchtdioden, umfasst, die über die elektronische Steuerungseinheit (16) so ansteuerbar sind, dass ein Sichtfeld (42) der Anzeigeeinrichtung (20) in Abhängigkeit von dem Öffnungszustand des Flügels und zusätzlich der wenigstens einen weiteren Information über unterschiedliche Bereiche und/oder mit unterschiedlichen Farben ausleuchtbar ist,
wobei das Gehäuse (12) und das Sichtfeld (42) jeweils eine längliche Form mit einer Längsrichtung besitzen, wobei die Längsrichtung des Gehäuses (12) und die Längsrichtung des Sichtfeldes (42) parallel zueinander verlaufen, und
wobei das Sichtfeld (42) in Form eines zumindest im Wesentlichen geradlinigen, sich in Längsrichtung des Gehäuses (12) erstreckenden, gegebenenfalls unterbrochenen, in dem Gehäuse (12) ausgebildeten Spaltes vorgesehen ist,
**dadurch gekennzeichnet,**
**dass** es sich bei der jeweiligen weiteren Information um eine Information zu einer Raumluftqualität wie Luftfeuchtigkeit, Innentemperatur und CO2-Wert handelt.

2. Antrieb nach zumindest einem der vorstehenden Ansprüche,
**dadurch gekennzeichnet,**
**dass** die Leuchtmittel insbesondere wechselseitig auf einer Platine (32) angeordnet sind.

3. Antrieb nach zumindest einem der vorstehenden Ansprüche,
**dadurch gekennzeichnet,**
**dass** das Licht der Leuchtmittel in eine Lichtleitereinrichtung mit zumindest einem Lichtleiter gerichtet ist, um das Licht der Leuchtmittel zu dem Sichtfeld (42) zu transportieren.

4. Antrieb nach Anspruch 3,
**dadurch gekennzeichnet,**
**dass** mehrere Lichtleiter vorgesehen sind, die ausgehend von den Leuchtmitteln in voneinander verschiedenen Abschnitten des Sichtfeldes (42) enden.

5. Antrieb nach Anspruch 3 oder 4,
**dadurch gekennzeichnet,**
**dass** die Anzeigeeinrichtung (20) einen der Lichtleitereinrichtung nachgeordneten, insbesondere im Bereich des Sichtfeldes (42) angeordneten, Diffusor umfasst, um das Licht der Leuchtmittel zu streuen.

6. Antrieb nach zumindest einem der vorstehenden Ansprüche,
**dadurch gekennzeichnet,**
**dass** die Leuchtdioden zumindest eine RGB-Leuchtdiode umfassen.

7. Antrieb nach zumindest einem der vorstehenden Ansprüche,
**dadurch gekennzeichnet,**
**dass** die Leuchtmittel über die elektronische Steuerungseinheit (16) so ansteuerbar sind, dass das Sichtfeld (42) insgesamt und/oder, insbesondere in einer Längsrichtung betrachtet, bereichsweise mit unterschiedlicher Farbe ausleuchtbar ist, und/oder dass das Sichtfeld (42), insbesondere in einer Längsrichtung betrachtet, mit unterschiedlichen Längen ausleuchtbar ist.

8. Antrieb nach zumindest einem der vorstehenden Ansprüche,
**dadurch gekennzeichnet,**
**dass** die Leuchtmittel über die elektronische Steuerungseinheit (16) so ansteuerbar sind, dass über unterschiedliche Farben und/oder unterschiedliche Längen einer jeweiligen Anzeige im Sichtfeld (42) unterschiedliche Wichtigkeiten des jeweiligen Öffnungszustands des Flügels bzw. der jeweiligen weiteren Information signalisierbar sind.

9. Antrieb nach zumindest einem der vorstehenden Ansprüche,
**dadurch gekennzeichnet,**
**dass** die motorische Antriebseinheit (14) ein mittels eines Elektromotors (22) angetriebenes Spindelgetriebe (24) umfasst, über das der Flügel betätigbar ist.

10. Antrieb nach zumindest einem der vorstehenden Ansprüche,
**dadurch gekennzeichnet,**
**dass** die Messeinrichtung (18) einen Wegmesser, insbesondere ein Potentiometer oder dergleichen, umfasst.

11. Antrieb nach zumindest einem der vorstehenden Ansprüche,
**dadurch gekennzeichnet,**
**dass** der Antrieb (10) ein Bedienfeld (30) umfasst.

## Claims

1. Drive (10) for a casement of a window, a leaf of a door or the like, having a housing (12), a motorized drive unit (14), an electronic control unit (16), a measuring device (18), which is connected to the electronic control unit (16), for detecting the opening state of the casement or leaf and a display device (20), which can be actuated by means of the electronic control unit (16), for displaying the opening state of the casement or leaf and additionally at least one further item of information, wherein the display device (20) comprises a plurality of lighting means, in particular light-emitting diodes, which can be actuated by means of the electronic control unit (16) such that a viewing area (42) of the display device (20) can be illuminated over different regions and/or in different colours depending on the opening state of the casement or leaf and additionally the at least one further item of information,
wherein the housing (12) and the viewing area (42) each have an elongate shape with a longitudinal direction, wherein the longitudinal direction of the housing (12) and the longitudinal direction of the viewing area (42) run parallel to one another, and
wherein the viewing area (42) is provided in the form of an at least substantially straight, possibly interrupted, gap which extends in the longitudinal direction of the housing (12) and is formed in the housing (12),
**characterized**
**in that** the respective further item of information is an item of information relating to indoor air quality, such as atmospheric humidity, interior temperature and CC2 value.

2. Drive according to at least one of the preceding claims,
**characterized**
**in that** the lighting means are arranged, in particular in an alternating fashion, on a printed circuit board (32) .

3. Drive according to at least one of the preceding claims,
**characterized**
**in that** the light of the lighting means is directed into a light guide device having at least one light guide in order to transport the light of the lighting means to the viewing area (42) .

4. Drive according to Claim 3,
**characterized**
**in that** a plurality of light guides are provided, the light guides, starting from the lighting means, ending in different sections of the viewing area (42).

5. Drive according to Claim 3 or 4,
**characterized**
**in that** the display device (20) comprises a diffuser which is arranged downstream of the light guide device, in particular is arranged in the region of the viewing area (42), in order to scatter the light of the lighting means.

6. Drive according to at least one of the preceding claims,
**characterized**
**in that** the light-emitting diodes comprise at least one RGB light-emitting diode.

7. Drive according to at least one of the preceding claims,
**characterized**
**in that** the lighting means can be actuated by means of the electronic control unit (16) such that the entire viewing area (42) and/or, in particular as viewed in a longitudinal direction, regions of the viewing area (42) can be illuminated in different colours, and/or in that the viewing area (42), in particular as viewed in a longitudinal direction, can be illuminated to different lengths.

8. Drive according to at least one of the preceding claims,
**characterized**
**in that** the lighting means can be actuated by means of the electronic control unit (16) such that different levels of importance of the respective opening state of the casement or leaf or the respective further item of information can be indicated by means of different colours and/or different lengths of a respective display in the viewing area (42).

9. Drive according to at least one of the preceding claims,
**characterized**
**in that** the motorized drive unit (14) comprises a spindle gear (24) which is driven by means of an electric motor (22) and by means of which the casement or leaf can be operated.

10. Drive according to at least one of the preceding claims,
**characterized**
**in that** the measuring device (18) comprises a distance meter, in particular a potentiometer or the like.

11. Drive according to at least one of the preceding claims,
**characterized**
**in that** the drive (10) comprises an operator control area (30) .

## Revendications

1. Entraînement (10) pour un battant d'une fenêtre, d'une porte ou analogue, avec un boîtier (12), une unité d'entraînement motorisée (14), une unité de commande électronique (16), un dispositif de mesure (18) en liaison avec l'unité de commande électronique (16) pour détecter l'état d'ouverture du battant et un dispositif d'affichage (20) pouvant être commandé par l'intermédiaire de l'unité de commande électronique (16) pour l'affichage de l'état d'ouverture du battant et en outre au moins une autre information, le dispositif d'affichage (20) comprenant une pluralité de moyens d'éclairage, notamment des diodes électroluminescentes, qui peuvent être commandées par l'intermédiaire de l'unité de commande électronique (16) de telle sorte qu'un champ de vision (42) du dispositif d'affichage (20) peut être éclairé sur différentes zones et/ou avec différentes couleurs en fonction de l'état d'ouverture du battant et en outre de l'au moins une autre information,
le boîtier (12) et le champ de vision (42) possédant chacun une forme allongée avec une direction longitudinale, la direction longitudinale du boîtier (12) et la direction longitudinale du champ de vision (42) s'étendant parallèlement l'une à l'autre, et
le champ de vision (42) étant prévu sous la forme d'une fente au moins essentiellement rectiligne, s'étendant dans la direction longitudinale du boîtier (12), éventuellement interrompue, formée dans le boîtier (12),
**caractérisé en ce que**
l'autre information respective consiste en une information concernant une qualité de l'air ambiant telle que l'humidité de l'air, la température intérieure et la valeur de CO₂.

2. Entraînement selon au moins l'une quelconque des revendications précédentes, **caractérisé en ce que** les moyens d'éclairage sont agencés notamment en alternance sur une platine (32).

3. Entraînement selon au moins l'une quelconque des revendications précédentes, **caractérisé en ce que** la lumière des moyens d'éclairage est dirigée dans un dispositif de guidage de lumière avec au moins un guide de lumière pour transporter la lumière des moyens d'éclairage vers le champ de vision (42).

4. Entraînement selon la revendication 3, **caractérisé en ce que** plusieurs guides de lumière sont prévus qui, en partant des moyens d'éclairage, se terminent dans des sections différentes les unes des autres du champ de vision (42).

5. Entraînement selon la revendication 3 ou 4, **caractérisé en ce que** le dispositif d'affichage (20) comprend un diffuseur agencé en aval du dispositif de guidage de lumière, notamment dans la zone du champ de vision (42), afin de diffuser la lumière des moyens d'éclairage.

6. Entraînement selon au moins l'une quelconque des revendications précédentes, **caractérisé en ce que** les diodes électroluminescentes comprennent au moins une diode électroluminescente RGB.

7. Entraînement selon au moins l'une quelconque des revendications précédentes, **caractérisé en ce que** les moyens d'éclairage peuvent être commandés par l'intermédiaire de l'unité de commande électronique (16) de telle sorte que le champ de vision (42) peut être éclairé globalement et/ou, notamment considéré dans une direction longitudinale, par zones avec des couleurs différentes, et/ou que le champ de vision (42), notamment considéré dans une direction longitudinale, peut être éclairé avec des longueurs différentes.

8. Entraînement selon au moins l'une quelconque des revendications précédentes, **caractérisé en ce que** les moyens d'éclairage peuvent être commandés par l'intermédiaire de l'unité de commande électronique (16) de telle sorte que des couleurs différentes et/ou des longueurs différentes d'un affichage respectif dans le champ de vision (42) permettent de signaler des importances différentes de l'état d'ouverture respectif du battant ou de l'autre information respective.

9. Entraînement selon au moins l'une quelconque des revendications précédentes, **caractérisé en ce que** l'unité d'entraînement motorisée (14) comprend un engrenage à broche (24) entraîné au moyen d'un moteur électrique (22), par l'intermédiaire duquel le battant peut être actionné.

10. Entraînement selon au moins l'une quelconque des revendications précédentes, **caractérisé en ce que** le dispositif de mesure (18) comprend un capteur de déplacement, notamment un potentiomètre ou analogue.

11. Entraînement selon au moins l'une quelconque des revendications précédentes, **caractérisé en ce que** l'entraînement (10) comprend un panneau de commande (30) .
